# EUROPEAN PATENT SPECIFICATION

(11) **EP 0 598 080 B1**
(45) Date of publication and mention of the grant of the patent: **20.11.1996**
(21) Application number: 93910022.8
(22) Date of filing: 31.05.1993
(51) Int. Cl.: B60J 3/02

(54) **SPRING-HINGE FOR SUN VISORS OF MOTOR VEHICLES**
SCHARNIERARTIGE FEDER FÜR KRAFTFAHRZEUG-SONNENBLENDE
CHARNIERE A RESSORT POUR PARE-SOLEIL DE VEHICULES AUTOMOBILES

(30) Priority: 09.06.1992 ES 9201203
(43) Date of publication of application: 25.05.1994
(73) Proprietor: FICO I.T.M., S.A., E-08027 Barcelona (ES)
(72) Inventor: AYMERICH MUNOZ, José, E-08191 Rubi (ES); PRAT CASTAN, Jesús, E-08191 Rubi (ES)
(74) Representative: SUGRANES - VERDONCES - FERREGÜELA
(86) International application number: ES9300046
(87) International publication number: WO9325402

(56) References cited:
- EP-A- 0 068 269
- EP-A- 0 099 968
- DE-A- 3 002 124
- DE-A- 3 704 751

## Description

### Field of the invention

The object of the present invention is a spring hinge for automobile sun visors, said spring hinge being in particular applicable to sun visors of modular structure for fixing the position occupied by the sun visor among the regular positions of use which may be selected by the user.

### Background of the invention

As is known, the hinges which are incorporated in general as original equipment in automobile sun visors allow said visors stably to occupy many positions which may be selected at will by the users. The hinges normally incorporated in sun visors of modular structure are formed by a hinge body attached to the sun visor or defined by the sun visor itself, by a spring and by a pivot pin which is basically of circular section and is formed, in general, with a bent support which is attached to the vehicle structure. The hinge spring is housed in a cavity for that purpose in the hinge body and is dimensioned so that, in turn, it may snugly house the corresponding end of the support pivot pin. In this way the sun visor may be rotated by the user around the said pivot pin. The gripping pressure of the spring on the pivot pin determines the positional stability of the sun visor and, under normal conditions of use, prevents untimely release or rocking of the sun visor from the position selected by the user.

Apart from the said gripping pressure of the spring on the pivot pin, both members, spring and pin, comprise mechanical means for more firmly fixing the one or several rest positions of the sun visor defined by the vehicle manufacturer. Such mechanical means consist, in general, of positioning flats which reciprocally are formed on the spring and the pivot pin and which correspond with the rest positions contemplated for the sun visor.

As example of spring for sun visor hinges like those described in the foregoing paragraphs, there may be cited the spring disclosed in the Spanish patent ES-A-2027930 (equivalent to EP-A- 0 525143; and US-A- 5364149) which describes a one-piece spring of essentially prismatic shape which is symmetrical about its longitudinal centre plane EP-A-0 525 143 and US-A-5 364 149 have been published on February 3^{rd}, 1993 and November 15^{th}, 1994 respectively. This spring according to Spanish patent ES-A-2027930 has two resilient longitudinal wings, of basically rectangular shape, which define in the interior of the hinge respective positioning flats and a housing for snugly receiving the corresponding end of the pivot pin.

The pivot pin associated with the spring of the Spanish patent ES-A-2027930 comprises positioning flats dimensioned and disposed in correspondence with the positioning flats of the spring, so that both spring and pin work in the following way: with the sun visor in any of its available rest positions, the two spring wings press, through their respective positioning flats, on the corresponding positioning flats of the pivot pin, the rest position occupied by the sun visor being ensured in this way with greater firmness if the sun visor is in a position other than one of the rest positions, both spring wings through their positioning flats press against the curved surface of the pivot pin and, in any case, on a surface of substantially less extension than the surface pressed by the spring wings when the sun visor occupies one of the rest positions. As a conclusion of the foregoing, it will be understood that, the rotation torque which is required to be applied by the user on the sun visor for this to move out of the rest position is much greater than the rotating torque required to modify the position of the sun visor from a position other than that of rest. It is for this reason that, under certain conditions, as may be the ageing of the spring and/or the conditions of running of the vehicle in which the sun visor is subjected to strong vibration, the sun visor, when in a position other than a rest position, may move and change its position relative to the one selected by the user.

In German Patent document DE-A-3 002 124 a spring hinge for automobile sun visors having two resilient side walls is described. But an adequate retention of the pivot pin, that is of the sun visor, under strong vibration is not guaranteed either.

### Explanation of the invention

With a view of providing a new spring embodiment for sun visor hinges which solves the problem which may arise with the known embodiments of springs described previously, there is disclosed a spring hinge for automobile sun visors.

The spring hinge of the invention may be attached to sun visor hinges of modular structure, where the said spring hinge is housed in a cavity provided for that purpose in the hinge body and with capacity for snugly receiving the corresponding end of the pivot pin of the bent support, so that the sun visor may be rotated around said pivot pin and stably occupy any position selected by the user among the regular positions of use.

The spring hinge of the invention is made from a highly resilient material and is formed with a quadrangular essentially prismatic one-piece hollow body open at both ends in which there is defined:
- on one side, which is the top wall, a longitudinal through slot which extends coextensive with the side along the centre;
- on both side walls forming right angle with the top wall, respective longitudinal recesses which extend coextensive with the said side walls forming respective flexible positioning and pressing wings which, with the pertinent portions of top wall internally form a housing for snugly receiving the corresponding end of a pivot pin;
- the resilient positioning wing has, longitudinally in its interior, an essentially rectangular surface extending coextensive therewith, which forms a single positioning flat dimensioned correspondingly with the positioning flat or flats of the pivot pin, which positioning flat merges tangentially with the concave surface of the pertinent portion of the top wall; the resilient pressing wing is provided internally and longitudinally with a concave surface extending coextensive therewith and the curvature of which coincides with the curvature of the portion of the curved profile of the pivot pin, said concave surface merging tangentially with the concave surface of the pertinent portion of the top wall;
- adjacent to said housing of the pivot pin and delimited by the bottom wall and by the two side walls forming a right angle therewith, a housing for snugly receiving a means setting the position occupied by the spring hinge inside the hinge body; (spring hinge of the type disclosed e.g. in DE-A-3 002 124); and it is characterized in that:
- the two portions of the top wall of the spring hinge respectively longitudinally are formed with a concave inner surface the curvature of which coincides with the curvature of the portion of the curved profile of the pivot pin;
- the positioning wing is converging from the zone in which it is merging with one of the side walls towards the housing for snugly receiving the corresponding end of the pivot pin.

With the spring hinge of the invention attached to the hinge body through the pertinent fixing means, and with the corresponding end of the pivot pin disposed in the housing defined between the positioning and pressing flats and the portions of the top wall of the one-piece body, the above described features of the spring hinge of the invention allow this to work in the following way: if the sun visor is in a rest position, the positioning wing through its positioning flat presses against the corresponding positioning flat of the pivot pin and the pressing wing and the two curved portions of the top wall through their respective concave surfaces press against the curved profile portion of the pivot pin; and, when the sun visor is in a position other than the rest position, the positioning wing through its positioning flat presses against the curved profile portion of the pivot pin, while the pressing wing and the pertinent portion of the top wall through their respective concave surfaces continue pressing against the curved profile portion of the pivot pin.

Thus, the action of the two characteristic resilient positioning and pressing wings and of the two portions of the top wall of the spring hinge according to the invention on the pivot pin determines that, to rotate the sun visor between positions other than the rest position, the rotation torque that the user has to apply to the sun visor is much greater than the rotation torque which, under like conditions, are required by the known hinge spring embodiments for sun visor hinges such as described above. Furthermore, when the sun visor is in a rest position, the action of the two resilient wings and of the two portions of the top wall of the spring hinge of the invention on the pivot pin, and particularly the joint action of the positioning flats of the positioning wing and the pivot pin, more firmly fixed said rest position, it being necessary that the user to move the sun visor from a rest position to another position must apply a rotation torque greater than the rotation torque required to move the sun visor between positions other than the rest position.

### Brief description of the drawings

The spring hinge for automobile sun visors of the invention is illustrated in the sheet of drawings of this specification. In said drawings:
Figure 1 is a front view of the spring hinge of the invention.
Figure 2 is a cross-section view on the line II-II of Figure 1.
Figure 3 is a cross-section view showing the gripping action of the spring hinge of the invention on the pivot pin when the sun visor is in the rest position.
Figure 4 is a cross-setion view showing the gripping action of the spring hinge of the invention on the pivot pin when the sun visor is in a position other than the rest position.

### Detailed description of the embodiment

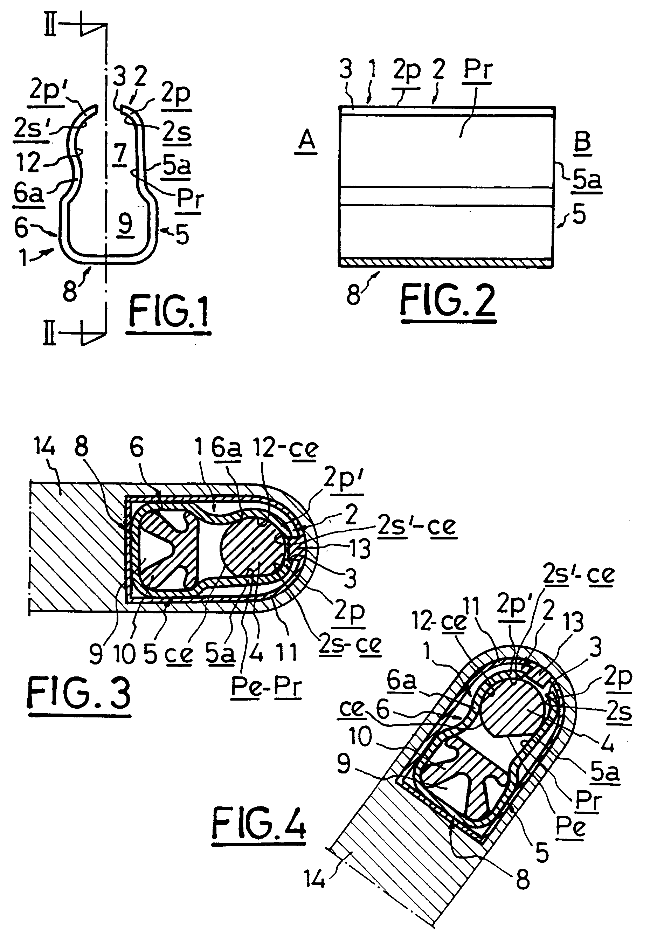

The spring hinge for automobile sun visors of the invention described as an exemplary embodiment comprises, as shown in figures 1 and 2, the one-piece body member 1 which is made, preferably, from a sheet of quadrangular basic profile of highly spring steel material. Said figures 1 and 2 show how the one-piece body 1 is essentially of hollow prismatic shape and is open at both ends A and B.

Figures 1 and 2 show how the top wall 2 of the one-piece body member is provided with the through slot 3 which is coextensive longitudinally in the centre of said top wall 2 defining the two longitudinal portions 2p and 2p'. As shown in figure 1, both longitudinal portions 2p and 2p' are curved so that they are provided internally with respective concave surfaces 2s and 2s' the curvature of which coincides with the curvature of the curved profile portion ce of the pivot pin 4 shown in figures 3 and 4.

Figures 1, 3 and 4 show how the two side walls 5 and 6 of the one-piece body 1 have their upper portion, which is adjacent to the top wall 2, in a longitudinal recess forming the flexible wings 5a, which is the positioning wing, and 6a, which is the pressing wing, respectively.

The positioning wing 5a, the pressing wing 6a and the two portions 2p and 2p' of the top wall 2 define inside the one-piece body 1 the housing 7 shown in figure 1 and which is for snugly receiving the corresponding end of the pivot pin 4. Adjacent the housing 7, the bottom wall 8 and side walls 5 and 6 of the one-piece body 1 in turn delimit the retaining housing 9 which is for snugly receiving the axial extension 10 of the hinge body 11 as shown in figures 1, 3 and 4.

Figure 1 shows how the positioning wing 5a is convergently angled relative to the longitudinal centre plane of the one-piece body 1 and the inner surface thereof, which is essentially rectangular as shown in figure 2, forms the positioning flat Pr which is dimensioned in correspondence with the positioning flat Pe of the pivot pin 4, it being shown in figure 3 how both positioning flats Pr and Pe are positionally and dimensionally mating to each other.

Figures 1, 3 and 4 show how the pressing wing 6a is provided coextensive therewith with an concave inner surface 12 the curvature of which coincides with the curvature of the portion of the curved profile ce of the pivot pin 4.

Figure 1 shows how the positioning flat Pr of the positioning wing 5a tangentially merges with the concave surface 2s of the portion 2p of the top wall 2. Likewise, the concave surface 12 of the pressing wing 6a also merges tangentially with the concave surface 2s' of the portion 2p' of the top wall 2. In this way, the portions 2p and 2p' of the top wall 2, spaced apart by the through slot 3, and the pressing wing 6a internally form a concave longitudinal surface the curvature of which is mating with the curvature of the curved profile portion ce of the pivot pin 4.

To fix the one-piece body 1 with the hinge body 11, the latter comprises the axial extension 10, which is snugly located in the housing 9 formed by the bottom wall 8 and the side walls 5-6 of the one-piece body 1, and the longitudinal prismatic projection 13 which is disposed in the through slot 3 of the one-piece body 1 separating both portions 2p and 2p' of the top wall 2, as shown in figures 3 and 4.

The hinge body 11 shown in figures 3 and 4 and which is attached to the body 14 of the sun visor is given only as a guidance since this hinge body 11 may adopt any other shape appropriate for each particular application. Furthermore, as said above, the hinge body 11 may be formed by the body 14 of the sun visor. In any case, that is, both if the hinge body 11 forms an element attached to the body 14 of the sun visor and if the hinge body 11 is formed by the body 14 of the sun visor, this in no way affects the operativeness of the spring hinge of the invention.

For greater clarity of description, the sun visor body 14 has been shown in part in figures 3 and 4. For the same reason, the support attached to the automobile structure and to which the pivot pin 4 is associated has not been shown either.

Figures 3 and 4 show how the pivot pin 4 comprises a positioning flat Pe for setting a single rest position of the sun visor, although, obviously, the pivot pin 4 may comprise two or more positioning flats Pe for setting a like number of rest positions of the sun visor, without this affecting the operativeness of the spring hinge of the invention.

When the hinge body 11, the one-piece body 1 and the pivot pin 4 are attached together with the sun visor body 14 as shown in figures 3 and 4, the spring hinge of the invention described as an exemplary embodiment operates as follows: when the sun visor is in the rest position as shown in figure 3, the positioning wing 5a through its positioning flat Pr presses on the positioning flat Pe of the pivot pin 4, and, at the same time, the portions 2p and 2p' and the pressing wing 6a through their respective concave surfaces 2s, 2s' and 12 press on the curved profile portion ce of the pivot pin 4; and, when the sun visor is in a position other than the rest position as shown in figure 4, the positioning wing 5a through its positioning flat Pr presses on the curved profile portion ce of the pivot pin 4, while the portion 2p' of the top wall 2 and the pressing wing 6a through their respective concave surfaces 2s' and 12 continue pressing on the curved profile portion ce of the pivot pin 4.

From the operation of the spring hinge of the invention described in the foregoing paragraph, it will be understood that, to move the sun visor from the rest position to any other position, the user must apply to the sun visor a rotation torque substantially greater than the rotation torque required to move the sun visor between positions other than the rest position, the rest position occupied by the sun visor being ensured in this way with greater firmness.

The joint action of the two characteristic resilient positioning 5a and pressing 6a wings and of the two portions 2p and 2p' of the top wall 2 on the pivot pin determines that, practically, the difference between the rotation torque that the user must apply to the sun visor to modify its position from its rest position to any other, and between positions other than the rest position, stems only from the action of the positioning wing 5a on the positioning flat Pe of the pivot pin 4, since, as described previously, the gripping action of the pressing wing 6a and of portion 2p' of the top wall 2 of the one-piece body 1 on the curved profile portion ce of the pivot pin 4 is maintained independently of the position occupied by the sun visor. In this way, the permanent action of the pressing wing 6a and of the portion 2p' of the top wall 2 of the one-piece body on the pivot pin 4 determines that the rotation torque necessary to move the sun visor between positions other than the rest position is much higher than the rotation torque required to be applied to sun visors incorporating the said known embodiments of springs for hinges in which, as said above, the ageing and the running conditions of the vehicle may cause some positional instability of the sun visor.

## Claims

1. Spring hinge for automobile sun visors which is made from a highly resilient material and is formed with a quadrangular essentially prismatic one-piece hollow body (1) open at both ends (A, B) in which there is defined:
- on one side (2), which is the top wall, a longitudinal through slot (3) which extends coextensive with the side (2) along the centre;
- on both side walls (5, 6) forming right angle with the top wall (2), respective longitudinal recesses which extend coextensive with the said side walls (5, 6) forming respective flexible positioning and pressing wings (5a, 6a) which, with the pertinent portions (2p, 2p') of top wall (2) internally form a housing (7) for snugly receiving the corresponding end of a pivot pin (4);
- the resilient positioning wing (5a) has, longitudinally in its interior, an essentially rectangular surface extending coextensive therewith, which forms a single positioning flat (Pr) dimensioned correspondingly with the positioning flat or flats (Pe) of the pivot pin (4), which positioning flat (Pr) merges tangentially with the concave surface (2s) of the pertinent portion (2p) of the top wall (2); the resilient pressing wing (6a) is provided internally and longitudinally with a concave surface (12) extending coextensive therewith and the curvature of which coincides with the curvature of the portion of the curved profile (ce) of the pivot pin (4), said concave surface (12) merging tangentially with the concave surface (2s') of the pertinent portion (2p') of the top wall (2);
- adjacent to said housing (7) of the pivot pin (4) and delimited by the bottom wall (8) and by the two side walls (5, 6) forming a right angle therewith, a housing (9) for snugly receiving a means (10) setting the position occupied by the spring hinge inside the hinge body (11); and it is characterized in that:
- the two portions (2p, 2p') of the top wall (2) of the spring hinge respectively longitudinally are formed with a concave inner surface (2s, 2s') the curvature of which coincides with the curvature of the portion of the curved profile (ce) of the pivot pin (4);
- the positioning wing (5a) is converging from the zone in which it is merging with one (5) of the side walls (5, 6) towards the housing (7) for snugly receiving the corresponding end of the pivot pin (4)

## Patentansprüche

1. Federscharnier für Automobilsonnenblenden, welches aus einem hochelastischen Material hergestellt und mit einem rechtwinkligen, im wesentlichen prismatischen einteiligen Hohlkörper 1 ausgebildet ist, der an beiden Enden (A, B) offen ist und in welchem folgende Bauteile enthalten sind:
- an einer Seite (2), welche die obere Wand ist, ein länglicher durchgehender Schlitz 3, welcher sich entlang der Mitte über dieselbe Länge wie die Seite 2 erstreckt;
- an beiden Seitenwänden (5, 6), die mit der oberen Wand (2) einen rechten Winkel ausbilden, jeweilige Längsaussparungen, welche sich über dieselbe Länge wie die Seitenwände (5, 6) erstrecken, die jeweils flexible Positionierungs- und Andruckflügel (5a, 6a) ausbilden, welche, mit den passenden Abschnitten (2p, 2p') der oberen Wand (2) innen ein Gehäuse (7) zur enganliegenden Aufnahme des entsprechenden Endes eines Gelenkzapfens (4) ausbilden;
- wobei der elastische Positionierungsflügel (5a) längs in seinem Inneren eine im wesentlichen rechteckige Oberfläche hat, die sich über dessen Länge erstreckt und welche eine einzelne Positionierungsfläche (Pr) ausbildet, die entsprechend der Positionierungsfläche oder der Flächen (Pe) des Gelenkzapfens (4) dimensioniert ist, wobei die Positionierungsfläche (Pr) tangential in die konkave Oberfläche (2s) des passenden Abschnittes (2p) der oberen Wand (2) übergeht; der elastische Druckflügel (6a) innen und in Längsrichtung mit einer konkaven Oberfläche (12) versehen ist, die sich über dessen Länge erstreckt und deren Krümmung mit der Krümmung des Abschnitts des gekrümmten Profils (ce) des Gelenkzapfens (4) übereinstimmt, wobei die konkave Oberfläche (12) tangentiell in die konkave Oberfläche (2s') des passenden Abschnittes (2p) der oberen Wand (2) übergeht;
- benachbart zum Gehäuse (7) des Gelenkzapfens (4) und durch die Bodenwand (8) und durch die beiden Seitenwände (5, 6), die damit einen rechten Winkel bilden, abgegrenzt, ein Gehäuse (9) zur engen Aufnahme einer Einrichtung (10), die die Position fesflegt, die durch das Federscharnier innerhalb des Scharnierkörpers (11) eingenommen wird; und welcher dadurch gekennzeichnet ist, daß:
- die beiden Abschnitte (2p, 2p') der oberen Wand (2) des Federscharniers jeweils in Längsrichtung mit einer konkaven inneren Oberfläche (2s, 2s') ausgebildet sind, deren Krümmung mit der Krümmung des Abschnitts des gekrümmten Profils (ce) des Gelenkzapfens (4) übereinstimmt;
- der Positionierungsflügel (5a) von der Zone, in welcher er in eine (5) der Seitenwände (5, 6) übergeht, in Richtung des Gehäuses (7) konvergiert, um das entsprechende Ende des Gelenkzapfens (4) enganliegend aufzunehmen.

## Revendications

1. Articulation élastique pour pare-soleil de véhicules automobiles, fabriquée dans un matériau à haute élasticité et présentant un corps creux monobloc (1) quadrangulaire, essentiellement prismatique, ouvert aux deux extrémités (A, B), et présentant :
- dans l'un de ses côtés correspondant à sa paroi supérieure (2), une fente longitudinale débouchante (3), qui s'étend sur la totalité de la longueur de ladite paroi supérieure (2), et dans la partie centrale de celle-ci ;
- sur ses deux parois latérales (5, 6) formant un angle droit avec la paroi supérieure (2), des enfoncements longitudinaux respectifs, s'étendant sur la totalité de la longueur desdites parois latérales précitées (5, 6) et constituant des ailettes de positionnement et de pression (5a, 6a) souples, respectivement, lesquelles forment, intérieurement, avec les portions respectives (2p, 2p') de la paroi supérieure (2), un logement (7) appelé à recevoir, de manière bien ajustée, l'extrémité correspondante d'un pivot (4);
- l'ailette de positionnement élastique (5a) présente, longitudinalement, sur sa face interne et sur toute sa longueur, une surface essentiellement rectangulaire formant un seul plat de positionnement (Pr) pourvu de dimensions correspondant à celles du ou des plats de positionnement (Pe) du pivot (4), ledit plat de positionnement (Pr) se fondant, tangentiellement, avec la surface concave (2s) de la portion appropriée (2p) de la paroi supérieure (2); l'ailette de pression (6a) élastique est dotée, longitudinalement, sur sa face interne et sur toute sa longueur, d'une surface concave (12) dont la courbure correspond à la courbure de la portion de profil courbe (ce) du pivot (4), ladite surface concave (12) se fondant, tangentiellement, avec la surface concave (2s') de la portion respective (2p') de la paroi supérieure (2);
- au voisinage dudit logement (7) du pivot (4), et délimité par la paroi inférieure (8) et par les deux parois latérales (5, 6) formant un angle droit avec cette dernière, un logement (9) appelé à recevoir, de manière bien ajustée, un moyen (10) permettant d'affermir la position occupée par l'articulation élastique dans le corps (11) de la charnière, cette articulation élastique étant caractérisée en ce que :
- les deux portions (2p, 2p') de la paroi supérieure (2) de l'articulation élastique présentent, respectivement, sur la totalité de leur longueur, une surface interne concave (2s, 2s') dont la courbure coïncide avec la courbure de la portion de profil courbe (ce) du pivot (4);
- l'ailette de positionnement (5a) converge de la zone dans laquelle elle se fond avec l'une (5) des parois latérales (5, 6), vers le logement (7) appelé à recevoir, de manière bien ajustée, l'extrémité correspondante du pivot (4).
